# EUROPÄISCHE PATENTSCHRIFT

(11) **EP 3 645 318 B1**
(45) Veröffentlichungstag und Bekanntmachung des Hinweises auf die Patenterteilung: **18.08.2021**
(21) Anmeldenummer: 18719092.1
(22) Anmeldetag: 12.04.2018
(51) Int. Cl.: B60C 11/12

(54) **FAHRZEUGLUFTREIFEN**
PNEUMATIC VEHICLE TIRES
PNEUMATIQUE DE VÉHICULE

(30) Priorität: 30.06.2017 DE 102017211129
(43) Veröffentlichungstag der Anmeldung: 06.05.2020
(73) Patentinhaber: Continental Reifen Deutschland GmbH, 30165 Hannover (DE)
(72) Erfinder: BAUER, Claudia, 31542 Bad Nenndorf (DE); WIESE, Klaus, 30559 Hannover (DE); VENNEBÖRGER, Martin, 30625 Hannover (DE); BERGER, Christoph, 30173 Hannover (DE); SCHLITTENHARD, Jan, 30900 Wedemark (DE)
(74) Vertreter: Continental Corporation
(86) Internationale Anmeldenummer: PCT/EP2018/059377
(87) Internationale Veröffentlichungsnummer: WO 2019/001790

(56) Entgegenhaltungen:
- EP-A1- 3 034 332
- WO-A1-2015/086186
- WO-A1-2017/071843
- JP-A- H1 178 431
- JP-A- H02 189 203
- JP-A- 2001 191 741
- JP-A- 2002 187 413
- US-A1- 2013 139 937
- US-A1- 2015 151 586

## Beschreibung

Die Erfindung betrifft einen Fahrzeugluftreifen mit einem Laufstreifen mit sich in axialer Richtung erstreckenden schulterseitigen Blöcken mit parallel oder im Wesentlichen parallel zueinander verlaufenden Blockkanten und mit mittleren Blöcken zwischen den schulterseitigen Blöcken, wobei die schulterseitigen Blöcke und die mittleren Blöcke jeweils mit zumindest zwei in Draufsicht parallel zueinander verlaufenden Einschnitten versehen sind, welche eine Breite von 0,4 mm bis 0,8 mm und an ihrer tiefsten Stelle eine Tiefe von mindestens 50% der Profiltiefe aufweisen, wobei die schulterseitigen Blöcke und die mittleren Blöcke mit mehreren, insbesondere mit zumindest vier, sich in Draufsicht im parallel zueinander erstreckenden Mikrorillen mit einer Breite von 0,2 mm bis 0,5 mm und einer Tiefe von 0,2 mm bis 0,5 mm versehen sind.

Ein Fahrzeugluftreifen der eingangs genannten Art ist beispielsweise aus der WO 2015 086 186 A1 bekannt. Sämtliche Blöcke des Laufstreifens sind mit einer großen Anzahl an Mikrorillen überzogen, die auch Schnitt- und Kreuzungsstellen zu den Einschnitten aufweisen. Ein solches Profil ist im Zuge der Vulkanisation schwer ausformbar. Viele der Mikrorillen erstrecken sich unmittelbar bei den Einschnitten und fallen daher teilweise auch mit den Einschnitten zusammen. Die durch die Mikrorillen gebildete Oberflächenstruktur trägt bei neuem Reifen dazu bei, den sich beim Bremsen und beim Beschleunigen auf schnee- und/oder eisbedeckten Fahrbahnen bildenden Wasserfilm von der Oberfläche der Blöcke schnell abzuleiten und den Laufstreifen derart zu entwässern. Die Mikrorillen verringern jedoch die Kontaktfläche des Laufstreifens zum Untergrund und wirken sich daher insbesondere nachteilig auf die Griff-, Traktions- und Bremseigenschaften des Fahrzeugluftreifens unter winterlichen Fahrbedingungen aus. Insbesondere bei sehr tiefen Temperaturen, bei welchen sich nur ein sehr dünner Wasserfilm bildet, sind die nachteiligen Auswirkungen der Mikrorillen auf die erwähnten Fahreigenschaften besonders ausgeprägt.

Für den Wintereinsatz vorgesehene Fahrzeugluftreifen weisen ferner häufig einen Laufstreifen aus weichem Gummimaterial, einem sogenannten "Softcompound", auf. Solche Laufstreifen tragen zu einer Verbesserung der Fahreigenschaften auf winterlichen Fahrbahnen bei. Das Ausmaß der positiven Auswirkungen auf die Fahreigenschaften eines Softcompound-Winterreifens hängt unmittelbar mit der Größe der Kontaktfläche des Laufstreifens zum Untergrund zusammen.

Der Erfindung liegt daher die Aufgabe zugrunde, einen Fahrzeugluftreifen der eingangs genannten Art derart zu gestalten und derart mit Mikrorillen und Einschnitten zu versehen, dass optimale Winterfahreigenschaften sichergestellt sind, wobei eine Ableitung des Wasserfilms über Mikrorillen gewährleistet sein soll und gleichzeitig die Kontaktfläche der Profilblöcke bei neuem Reifen derart groß sein soll, dass eine gute Kraftübertragung vom Reifens auf den Untergrund sichergestellt ist.

Gelöst wird die gestellte Aufgabe erfindungsgemäß dadurch, dass sich die Mikrorillen zu den Einschnitten parallel und kreuzungsfrei erstrecken,
wobei die in den schulterseitigen Blöcken ausgebildeten Einschnitte und Mikrorillen in Draufsicht zumindest über den Großteil ihrer Erstreckung jeweils in der Gestalt von aneinander anschließenden, abwechselnd in die eine und in die andere Umfangsrichtung weisenden, basislosen gleichschenkeligen Trapezen verlaufen,
wobei die mittleren Blöcke in Draufsicht im Wesentlichen parallelogrammförmig sind und in Umfangsrichtung auf "Spitzen" stehend angeordnet sind, und wobei die in den mittleren Blöcken ausgebildeten Einschnitte und Mikrorillen in Draufsicht wellen- oder zickzackförmig verlaufen.

Gemäß der Erfindung weisen die innerhalb jedes Blockes befindlichen Einschnitte und Mikrorillen daher einen weitgehend übereinstimmenden Verlauf auf, sodass die Mikrorillen und Einschnitte kreuzungsfrei nebeneinander verlaufen. Durch diese Ausgestaltung bleibt gegenüber der WO 2015 086 186 A1 eine größere Kontaktfläche des Laufstreifens erhalten und damit können auch Softcompound-Laufstreifens ihre Wirkung voll entfalten. Durch die schnittstellenfreie Anordnung von Mikrorillen und Einschnitten wird der sich beim Abrollen des Laufstreifen auf schnee- und/oder eisbedeckter Fahrbahn bildende Wasserfilm gleichmäßig unterbrochen, sodass der Laufstreifen besonders gut entwässert wird. Die in den schulterseitigen, in axialer Richtung orientierten Blöcken vorgesehenen "trapezförmigen" Einschnitte und Mikrorillen weisen ausgeprägte Queranteile auf, die für die Seitenführung und gute Quersteifigkeit auf winterlichen Fahrbahnen besonders vorteilhaft sind. Die parallelogrammförmigen, auf "Spitzen gestellten" Blöcke im mittleren Laufstreifenbereich weisen eine Blockkantenorientierung auf, die für eine gute Übertragung von Brems- und Traktionskräften besonders günstig ist. Zwischen den mittleren Blöcken verlaufen daher auch Rillen mit einer Orientierung, die für das Wasserableitvermögen vorteilhaft ist. In den in Querrichtung schmale Blockbereiche aufweisenden Blöcken ist die Anordnung von zickzack- oder wellenförmigen Einschnitten und Mikrorillen besonders günstig. Die Abschnitte der wellen- oder zickzackförmigen Einschnitte bewirken unter Belastung eine derartige Abstützung der Blocksegmente, dass die Blöcke insgesamt stabilisiert werden, sodass eine gute Quer- und Umfangssteifigkeit sichergestellt sind. Auch dadurch werden die Brems- und Traktionseigenschaften positiv beeinflusst.

Gemäß einer bevorzugten Ausführungsvariante weisen die Einschnitte und die Mikrorillen in den schulterseitigen Blöcken Trapezschenkel bildende Abschnitte und parallel zu den Blockkanten verlaufende Abschnitte auf, wobei die Trapezschenkel bildenden Abschnitte mit den parallel zu den Blockkanten verlaufenden Abschnitten jeweils einen Winkel von 110° bis 160° einschließen. Dies ist insbesondere für die Seitenführung und die Quersteifigkeit auf winterlichen Fahrbahnen besonders vorteilhaft. In diesem Zusammenhang ist es ferner von Vorteil, wenn gemäß einer weiteren bevorzugten Ausführungsvariante die Einschnitte und die Mikrorillen in den schulterseitigen Blöcken Abschnitte aufweisen, welche jeweils die Trapezschenkel von zwei unmittelbar aneinander angrenzenden Trapezen sind.

Gemäß einer weiteren bevorzugten Ausführungsvariante ist vorgesehen, dass in den schulterseitigen Blöcken zwischen den randseitigen Einschnitten und den Blockkanten jeweils eine einzige Mikrorille verläuft, welche über zumindest 80% ihrer Erstreckung einen konstanten Abstand zum jeweils benachbarten randseitigen Einschnitt aufweist. Dies trägt insbesondere zu einer gleichmäßigen Schmelzwasseraufnahme in den in Umfangsrichtung liegenden Randbereichen der schulterseitigen Blöcke bei.

Bevorzugter Weise weist die jeweils einzige Mikrorille parallel zu den Blockkanten ausgerichtete, näher zur benachbarten Blockkante befindliche Teilabschnitte mit einer Länge von 3,0 mm bis 9,0 mm und parallel zu den Blockkanten ausgerichtete, zur benachbarten Blockkante weiter entfernte Teilabschnitte mit einer Länge von 0,5 mm bis 5,0 mm auf.

Gemäß einer weiteren bevorzugten Ausführungsvariante verlaufen in den mittleren Blöcken und in den schulterseitigen Blöcken zwischen den Einschnitten ein bis drei Mikrorillen. Dies begünstigt die Ableitung des gebildeten Wasserfilms und trägt, insbesondere durch die erhöhte Anzahl an Kanten an der Oberfläche des Laufstreifens, zur Verbesserung der Winterfahreigenschaften, insbesondere der Griffeigenschaften auf Schnee und Eis, bei.

Gemäß einer weiteren bevorzugten Ausführungsvariante weisen Mikrorillen, die zwischen zwei Einschnitten verlaufen, zumindest über den Großteil ihrer Erstreckung zueinander gleich große Abstände auf. Die gleichmäßige Anordnung trägt ebenfalls zur Verbesserung der Winterfahreigenschaften und der Ableitung Wasserfilms über die Mikrorillen bei.

Bevorzugter Weise beträgt die Anzahl der Einschnitte pro mittlerem Block vier bis neun, insbesondere sechs oder sieben. Dies ist eine für die vorliegende Blockgeometrie optimale Anzahl, sodass die mittleren Blöcke einerseits gute Griffeigenschaften auf Schnee- und Eis liefern und andererseits über eine gewisse Steifigkeit verfügen.

Gemäß einer weiteren bevorzugten Ausführungsvariante sind in den schulterseitigen Blöcken weitere, insbesondere jeweils zwei oder drei, Mikrorillen ausgebildet, welche die sich parallel zueinander und kreuzungsfrei erstreckenden Mikrorillen und Einschnitte kreuzen. Bevorzugter Weise verlaufen die weiteren Mikrorillen in Draufsicht zur Umfangsrichtung unter einem Winkel von bis 13°, insbesondere von bis zu 10°, oder in Umfangsrichtung. Insbesondere unter Querbelastung, beispielsweise bei Kurvenfahrt, nehmen die weiteren Mikrorillen sehr schnell gebildetes Schmelzwasser auf. Die weiteren Mikrorillen weisen außerdem genau definierte Kreuzungsstellen zu den parallelen Einschnitten und Mikrorillen auf, sodass der Laufstreifen weiterhin in tadellosem Zustand ausformbar ist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine Teilabwicklung eines Laufstreifens eines Fahrzeugluftreifens mit einer Ausführungsvariante der Erfindung und
Fig. 2 eine vergrößerte Draufsicht auf zwei schulterseitige Profilblöcke des Laufstreifens aus Fig. 1.

Erfindungsgemäß ausgeführte Fahrzeugluftreifen sind Winterreifen in Radialbauart für Personenkraftwagen, Vans oder Light-Trucks.

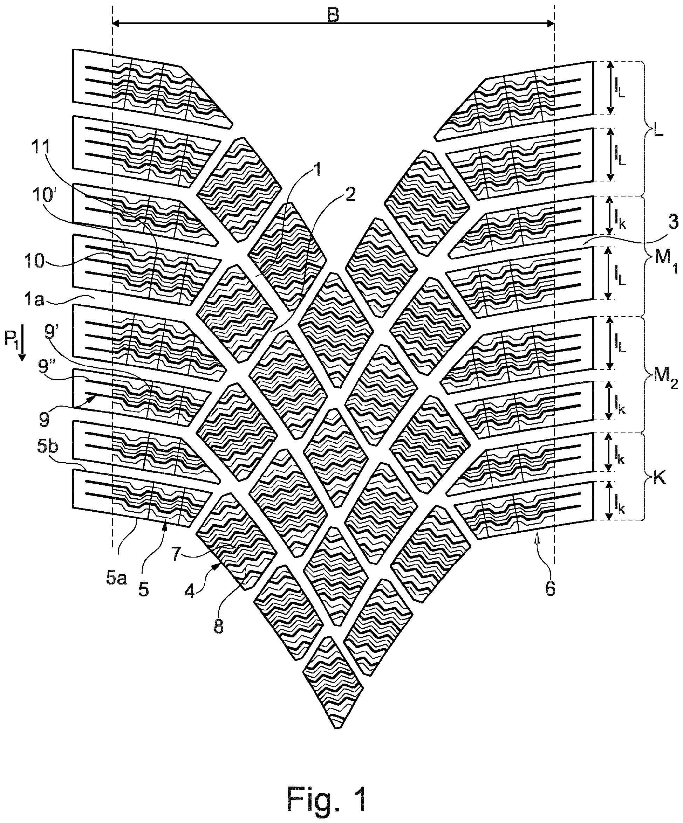

Der in Fig. 1 gezeigte Laufstreifen weist in jeder Laufstreifenhälfte parallel zueinander verlaufende Schrägrillen 1 auf, welche die Hauptrillen des Laufstreifens sind, sich von der Laufstreifenmitte bis zu den Laufstreifenrändern erstrecken und dem Laufstreifen in Draufsicht ein gepfeiltes Profil verleihen. Die Abrollrichtung des Reifens bei Vorwärtsfahrt ist durch den Pfeil P₁ angedeutet und derart, dass die Schrägrillen 1 bei Vorwärtsfahrt zuerst mit ihren laufstreifeninnenseitigen Enden in die Bodenaufstandsfläche eintreten. Die Breite B der Bodenaufstandsfläche entspricht der Breite des statisch ermittelten Footprints bei einer Last von 70 % der maximalen Tragfähigkeit bei einem Innendruck von 85 %, ermittelt gemäß E.T.R.T.O.-Standards.

Der Laufstreifen ist gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei bei dem gezeigten Ausführungsbeispiel Pitches L, M₁, M₂, K mit drei unterschiedlichen Umfangslängen vorgesehen sind. Der Pitch L weist die größte Umfangslänge, die Pitches M₁ und M₂ weisen eine übereinstimmend große mittlere Umfangslänge und der Pitch K weist die kleinste Umfangslänge auf. Die Pitches L, M₁, M₂, K werden über den Laufstreifenumfang innerhalb einer sogenannten Pitchfolge, die üblicherweise rechnerisch ermittelt wird, angeordnet. Jeder Pitch L, M₁, M₂, K umfasst einen in Draufsicht im Wesentlichen V-förmigen Profilabschnitt, welcher sich aus je einer der Schrägrillen 1 aus jeder der beiden Laufstreifenhälften und der an diese in Umfangsrichtung anschließenden Profilstrukturen zusammensetzt.

In jeder Laufstreifenhälfte verlaufen zwischen in Umfangsrichtung benachbarten Schrägrillen 1 jeweils drei Rillen 2, welche beispielsweise unter einem Winkel von 10° bis 50° sowie bezogen auf die Umfangsrichtung gegensinnig zu den Schrägrillen 1 verlaufen. Die Rillen 2 begrenzen gemeinsam mit den Schrägrillen 1 in jedem Pitch L, M₁, M₂, K fünf in Draufsicht im Wesentlichen parallelogrammförmige mittlere Blöcke 4, welche infolge des Verlaufes der Schrägrillen 1 und der Rillen 2 beim gezeigten Ausführungsbeispiel in Umfangsrichtung auf "Spitzen" stehend angeordnet sind, wobei diese "Spitzen" abgestumpfte Eckbereiche sind. Die Schrägrillen 1 erstrecken sich in jenem Bereich, in welchem sie die mittleren Blöcke 4 voneinander trennen, in Draufsicht zumindest über den Großteil ihrer Erstreckung unter einem Winkel von vorzugsweise 30° bis 60° zur Umfangsrichtung. Ferner weist jede Schrägrille 1 einen in Draufsicht in Querrichtung oder, wie in Fig. 1 gezeigt, unter einem von der Querrichtung um bis zu 20°, insbesondere um bis zu 12°, abweichenden Winkel verlaufenden Rillenabschnitt 1a auf, welcher, wie noch genauer beschrieben wird, zu Schulterblockreihen 6 gehörende schulterseitige Blöcke 5 voneinander trennt.

Jeder mittlere Block 4 ist mit vier bis neun, beim gezeigten Ausführungsbeispiel sechs oder sieben, gleichmäßig über den jeweiligen mittleren Block 4 verteilten Einschnitten 7 versehen, welche sich innerhalb jedes Blockes 4 parallel zueinander sowie zur axialen Richtung unter einem Winkel von bis zu 35° erstrecken, in Draufsicht jeweils zick-zackförmig, alternativ wellenförmig, verlaufen und den jeweiligen mittleren Block 4 durchqueren. Jeder Einschnitt 7 weist eine Breite von 0,4 mm bis 0,8 mm sowie in radialer Richtung an seiner tiefsten Stelle eine Tiefe von mindestens 50% der Profiltiefe auf, wobei die Profiltiefe für die betreffenden Fahrzeugluftreifen üblicherweise 6,5 mm bis 9,0 mm beträgt. Bevorzugter Weise weist jeder Einschnitt 7 an seiner bzw. seinen seichtesten Stelle(n) ein Tiefe von mindestens 20% der Profiltiefe auf. Vorzugsweise weisen die Einschnitte 7 ferner in bekannter Weise in die jeweilige Schrägrille 1 bzw. Rille 2 einmündende, seichtere randseitige Endabschnitte auf.

Die mittleren Blöcke 4 sind ferner jeweils mit einer Anzahl von Mikrorillen 8 versehen, welche sowohl zwischen Einschnitten 7 als auch zwischen dem in Umfangsrichtung jeweils randseitigen Einschnitt 7 und dem dort befindlichen Blockeckbereich ausgebildet sind, in Draufsicht parallel oder zumindest weitgehend parallel zu den Einschnitten 7 verlaufen und die Blöcke 4 durchqueren. In jedem Block 4 verläuft bei den Blockeckbereichen jeweils eine einzige Mikrorille 8, wobei diese Mikrorillen 8 zum jeweils benachbarten randseitigen Einschnitt 7 übereinstimmende Abstände aufweisen. Zwischen jedem randseitigen Einschnitt 7 und dem zu diesem unmittelbar benachbarten Einschnitt 7 ist mittig ebenfalls jeweils eine einzige Mikrorille 8 ausgebildet. Zwischen sämtlichen weiteren Einschnitten 7 verlaufen jeweils zwei Mikrorillen 8. Die Mikrorillen 8 weisen eine Breite und eine Tiefe von jeweils 0,2 mm bis 0,5 mm auf.

Zwischen den in Umfangsrichtung benachbarten Rillenabschnitten 1a der Schrägrillen 1 sind innerhalb jedes Pitches L, M₁, M₂, K je zwei schulterseitigen Blöcke 5, durch eine Querrille 3 voneinander getrennt, vorgesehen. Die Querrillen 3 verlaufen in Draufsicht im Wesentlichen parallel zu den Rillenabschnitten 1a und münden laufstreifeninnenseitig in eine Schrägrille 1 bzw. in eine der in der betreffenden Laufstreifenhälfte jeweils am weitesten laufstreifenaußenseitig verlaufende Rille 2.

Die Schrägrillen 1 begrenzen gemeinsam mit den am weitesten laufstreifenaußenseitig verlaufenden Rillen 2 und den Querrillen 3 die schulterseitigen Blöcke 5, welche in Rillenlaufrichtung der Querrillen 3 langgestreckt sind. Der Pitch L umfasst in jeder Schulterblockreihe 6 zwei schulterseitige Blöcke 5 mit jeweils einer Umfangslänge l_{L}. Die Pitches M₁, M₂ umfassen in jeder Schulterblockreihe 6 zwei schulterseitige Blöcke 5, von welchen der eine die Umfangslänge l_{L} und der andere eine Umfangslänge l_{K} aufweist, wobei l_{K} < l_{L} gilt und wobei die schulterseitigen Blöcke 5 mit den Umfangslängen l_{L} beim gezeigten Ausführungsbeispiel in Umfangsrichtung unmittelbar benachbart sind. Der Pitch K umfasst in jeder Schulterblockreihe 6 zwei schulterseitige Blöcke 5, von welchen jeder die Umfangslänge l_{K} aufweist.

Jeder schulterseitige Block 5 weist an der Laufstreifenperipherie eine beim Abrollen des Fahrzeugluftreifens bei Vorwärtsfahrt zuerst in die Bodenaufstandsfläche eintretende einlaufenden Blockkante 5a und eine aus der Bodenaufstandsfläche auslaufende Blockkante 5b auf, wobei die Blockkanten 5a, 5b parallel zueinander verlaufen.

Jeder schulterseitige Block 5 ist mit gleichmäßig über den Block 5 verteilten Einschnitten 9 versehen, welche in Draufsicht parallel zueinander verlaufen, sich im Wesentlichen parallel zu den Blockkanten 5a, 5b erstrecken und laufstreifeninnenseitig in eine Rille 2 bzw. in eine Schrägrille 1 einmünden. Jeder Einschnitt 9 weist eine Breite von 0,4 mm bis 0,8 mm sowie in radialer Richtung an der tiefsten Stelle eine Tiefe auf, welche mindestens 2,5 mm geringer ist als die vorgesehene Profiltiefe. Bevorzugter Weise weist jeder Einschnitt 9 innerhalb der Bodenaufstandsfläche an seiner bzw. seinen seichtesten Stelle(n) ein Tiefe von mindestens 20% der Profiltiefe auf. Ferner weisen die Einschnitte 9 insbesondere in bekannter Weise ausgeführte in eine Schrägrille 1 bzw. eine Rille 2 einmündende, seichtere randseitige Endabschnitte auf. Die Einschnitte 9 werden zu ihren laufstreifenaußenseitigen Enden in bekannter Weise seichter.

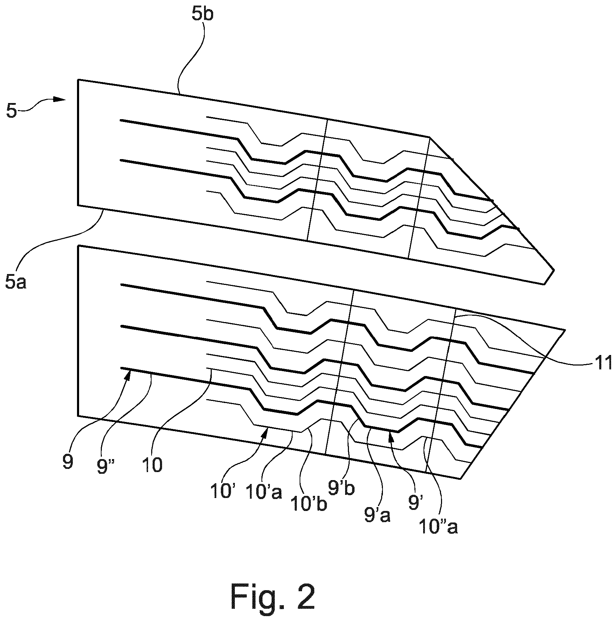

Wie insbesondere Fig. 2 zeigt, weist jeder Einschnitt 9 innerhalb der Breite B einen Hauptabschnitt 9' und laufstreifenaußenseitig einen in Draufsicht parallel zu den Blockkanten 5a, 5b verlaufenden Endabschnitt 9" auf. Der Hauptabschnitt 9' verläuft in Draufsicht in der Gestalt von aneinander anschließenden, abwechselnd in die eine und in die andere Umfangsrichtung weisenden, basislosen gleichschenkeligen Trapezen, wobei die unmittelbar aneinander angrenzenden Trapeze gemeinsame Trapezschenkel besitzen. Der Hauptabschnitt 9' setzt sich daher abwechselnd aus in Draufsicht parallel zu den Blockkanten 5a, 5b verlaufenden Teilabschnitten 9'a und Trapezschenkel bildenden Teilabschnitten 9'b zusammen. Die Trapezschenkel bildenden Teilabschnitte 9'b schließen mit den Teilabschnitten 9'a in Draufsicht jeweils einen Winkel von 110° bis 160° ein. Die Teilabschnitte 9'b weisen jeweils eine Länge von 2,0 mm bis 6,0 mm auf.

Die schulterseitigen Blöcke 5 sind ferner mit zwischen den Einschnitten 9 verlaufenden Mikrorillen 10 und mit je einer zwischen den randseitigen Einschnitten 9 und den Blockkanten 5a, 5b verlaufenden und daher bei den in Umfangsrichtung liegenden Blockrandbereichen ausgebildeten Mikrorille 10' versehen. Die Mikrorillen 10, 10' weisen eine Breite und eine Tiefe von jeweils 0,2 mm bis 0,5 mm auf und münden laufstreifeninnenseitig in eine Schrägrille 1 bzw. in eine Rille 2.

In jedem schulterseitigen Block 5 verlaufen zwischen zwei der vorgesehenen Einschnitte 9 zwei Mikrorillen 10, wobei zwischen sämtlichen weiteren in jedem schulterseitigen Block 5 vorgesehenen Einschnitten 9 nur eine einzige Mikrorille 10 verläuft. Befindet sich zwischen den Einschnitten 9 eine einzige Mikrorille 10, verläuft diese mittig zwischen den Einschnitten 9. Jene beiden Mikrorillen 10, die zwischen zwei Einschnitten 9 verlaufen, sind derart angeordnet, dass der Abstand zwischen ihnen und ihr Abstand zum jeweils benachbarten Einschnitt 9 zumindest über den Großteil der Erstreckung der Mikrorillen 10 gleich groß sind.

Wie insbesondere Fig. 2 zeigt, weisen die Mikrorillen 10 in Draufsicht eine zu den Einschnitten 9 übereinstimmende Gestaltung auf und verlaufen daher in der Gestalt von aneinander anschließenden, abwechselnd in die eine und in die andere Umfangsrichtung weisenden, basislosen gleichschenkeligen Trapezen. Die zwischen den Einschnitten 9 vorgesehenen Mikrorillen 10 verlaufen in Draufsicht im Wesentlichen parallel zu den Einschnitten 9.

Auch die blockrandseitig verlaufenden Mikrorillen 10' setzen sich in Draufsicht aus trapezförmigen Abschnitten zusammen, wobei ihr Verlauf derart ist, dass sie über ihre gesamte Erstreckung bzw. im Wesentlichen über ihre gesamte Erstreckung einen konstanten Abstand zum jeweils randseitigen Einschnitt 9 aufweisen. Die Mikrorillen 10' weisen daher parallel zu den Blockkanten 5a, 5b ausgerichtete, näher zur jeweiligen Blockkante 5a, 5b befindliche Teilabschnitte 10'a und parallel zu den Blockkanten 5a, 5b ausgerichtete, weiter von der jeweiligen Blockkante 5a, 5b entfernt befindliche Teilabschnitte 10"a auf, wobei die Teilabschnitte 10'a und Teilabschnitte 10"a innerhalb jeder Mikrorille 10' einander abwechseln und über Trapezschenkel bildende Teilabschnitte 10'b verbunden sind. Die Länge der Teilabschnitte 10'a, 10"a, 10'b der Mikrorillen 10' ist an die jeweilige Länge der Teilabschnitte 9'a und 9'b der Einschnitte 9 entsprechend des beschriebenen konstanten Abstandes der Mikrorillen 10' zu den Einschnitten 9 angepasst, wobei die Länge der Teilabschnitte 10'a 3,0 mm bis 9,0 mm und die Länge der Teilabschnitte 10"a 0,5 mm bis 5,0 mm beträgt.

Schulterseitige Blöcke 5 mit der Umfangslänge lₖ weisen lediglich zwei Einschnitte 9 und daher zwei zwischen diesen verlaufende Mikrorillen 10 auf. Schulterseitige Blöcke 5 mit der Umfangslänge l_{L} weisen drei Einschnitte 9 auf. Zwischen zwei dieser Einschnitte 9 verlaufen zwei Mikrorillen 10, vorzugsweise ist einer dieser Einschnitte 9 jener, welcher der einlaufenden Blockkante 5a benachbart verläuft.

Beim gezeigten Ausführungsbeispiel sind in jedem schulterseitigen Block 5 ferner zwei oder drei Mikrorillen 11 ausgebildet, welche in Draufsicht senkrecht oder im Wesentlichen senkrecht zu den Blockkanten 5a, 5b verlaufen und parallel zu den Blockkanten 5a, 5b verlaufende Teilabschnitte 9'a der Hauptabschnitte 9' der Einschnitte 9 und Teilabschnitte 10'a und 10"a der Mikrorillen 10' sowie Mikrorillen 10 schneiden. Die Mikrorillen 11 verlaufen in Draufsicht zur Umfangsrichtung unter einem Winkel von bis 13°, insbesondere von bis zu 10°, und können alternativ in Umfangsrichtung verlaufen.

Die Erfindung ist auf das beschriebene Ausführungsbeispiel nicht beschränkt. Insbesondere kann in den mittleren Blöcken 4 und den schulterseitigen Blöcken 5 jeweils auch nur in einem der beiden in Umfangsrichtung liegende Blockeckbereichen eine einzige zum jeweiligen randseitigen Einschnitt benachbarte Mikrorille ausgebildet sein. Ferner können zwischen benachbarten Einschnitten bis zu drei Mikrorillen verlaufen, welche vorzugsweise eine Breite von 0,2 mm bis 0,3 mm und eine Tiefe von 0,2 mm bis 0,3 mm aufweisen. Die Rillen können ferner im mittleren Bereich des Laufstreifens derart verlaufen und ausgebildet sein, dass sich die Einschnitte und Mikrorillen zu Blockkanten parallel erstrecken. Die Querrillen 3 und die Schrägrillen 1 können derart ausgeführt sein, dass ihre an der Laufstreifenperipherie ermittelte Breite zu den Außenseiten des Laufstreifens geringfügig zunimmt, sodass die Blockkanten 5a, 5b in Draufsicht im Wesentlichen parallel zueinander verlaufen.

Die Einschnitte und die Mikrorillen innerhalb jedes Blockes verlaufen vorzugsweise derart, dass ihre in Draufsicht jeweils in Erstreckungsrichtung ausgerichteten Mittellinien, unter Vernachlässigung der gekrümmten Kontur des Laufstreifens bzw. des Fahrzeugluftreifens, parallel zueinander verlaufen. Im Rahmen der gegenständlichen Erfindung verlaufen Einschnitte und Mikrorillen in diesem Sinne daher im Wesentlichen parallel oder parallel zueinander.

### Bezugsziffernliste

- 1 ...............................: Schrägrille
- 1a .............................: Rillenabschnitt
- 2 ...............................: Rille
- 3 ...............................: Querrille
- 4 ...............................: mittlerer Block
- 5 ...............................: schulterseitiger Block
- 5a, 5b........................: Blockkanten
- 6 ...............................: Schulterblockreihe
- 7 ...............................: Einschnitt
- 8 ...............................: Mikrorille
- 9 ...............................: Einschnitt
- 9' ..............................: Hauptabschnitt
- 9".............................: Endabschnitt
- 9'a, 9'b .....................: Teilabschnitt
- 10, 10' ......................: Mikrorille
- 10'a, 10"a, 10'b .......: Teilabschnitt
- 11 .............................: Mikrorille
- P₁..............................: Pfeil
- K, L, M₁, M₂.............: Pitch
- l_{L}, l_{K}..........................: Länge

## Patentansprüche

1. Fahrzeugluftreifen mit einem Laufstreifen mit sich in axialer Richtung erstreckenden schulterseitigen Blöcken (5) mit parallel oder im Wesentlichen parallel zueinander verlaufenden Blockkanten (5a, 5b) und mit mittleren Blöcken (4) zwischen den schulterseitigen Blöcken (5), wobei die schulterseitigen Blöcke (5) und die mittleren Blöcke (4) jeweils mit zumindest zwei in Draufsicht parallel zueinander verlaufenden Einschnitten (7, 9) versehen sind, welche eine Breite von 0,4 mm bis 0,8 mm und an ihrer tiefsten Stelle eine Tiefe von mindestens 50% der Profiltiefe aufweisen, wobei die schulterseitigen Blöcke (5) und die mittleren Blöcke (4) mit mehreren, insbesondere mit zumindest vier, in Draufsicht sich parallel zueinander erstreckenden Mikrorillen (8, 10, 10') mit einer Breite von 0,2 mm bis 0,5 mm und einer Tiefe von 0,2 mm bis 0,5 mm versehen sind, **wobei sich die Mikrorillen (8, 10, 10') zu den Einschnitten (7, 9) parallel und kreuzungsfrei erstrecken,**
**dadurch gekennzeihnet,**
**dass** die in den schulterseitigen Blöcken (5) ausgebildeten Einschnitte (9) und Mikrorillen (10, 10') in Draufsicht zumindest über den Großteil ihrer Erstreckung jeweils in der Gestalt von aneinander anschließenden, abwechselnd in die eine und in die andere Umfangsrichtung weisenden, basislosen gleichschenkeligen Trapezen verlaufen,
**dass** die mittleren Blöcke (4) in Draufsicht im Wesentlichen parallelogrammförmig sind und in Umfangsrichtung auf "Spitzen" stehend angeordnet sind, und
**dass** die in den mittleren Blöcken (4) ausgebildeten Einschnitte (7) und Mikrorillen (8) in Draufsicht wellen- oder zickzackförmig verlaufen.

2. Fahrzeugluftreifen nach Anspruch 1, **dadurch gekennzeichnet, dass** die Einschnitte (9) und die Mikrorillen (10, 10') in den schulterseitigen Blöcken (5) Trapezschenkel bildende Abschnitte (9'b, 10'b) und parallel zu den Blockkanten (5a, 5b) verlaufende Abschnitte (9'a, 10'a, 10"a) aufweisen, wobei die Trapezschenkel bildenden Abschnitte (9'b, 10'b) mit den parallel zu den Blockkanten (5a, 5b) verlaufenden Abschnitten (9'a, 10'a, 10"a) jeweils einen Winkel von 110° bis 160° einschließen.

3. Fahrzeugluftreifen nach Anspruch 1 oder 2, **dadurch gekennzeichnet, dass** die Einschnitte (9) und die Mikrorillen (10, 10') in den schulterseitigen Blöcken (5) Abschnitte aufweisen, welche jeweils die Trapezschenkel von zwei unmittelbar aneinander angrenzenden Trapezen sind.

4. Fahrzeugluftreifen nach einem der Ansprüche 1 bis 3, **dadurch gekennzeichnet, dass** in den schulterseitigen Blöcken (5) zwischen den randseitigen Einschnitten (9) und den Blockkanten (5a, 5b) jeweils eine einzige Mikrorille (10') verläuft, welche über zumindest 80% ihrer Erstreckung einen konstanten Abstand zum jeweils benachbarten randseitigen Einschnitt (9) aufweist.

5. Fahrzeugluftreifen nach Anspruch 4, **dadurch gekennzeichnet, dass** die jeweils einzige Mikrorille (10') parallel zu den Blockkanten (5a, 5b) ausgerichtete, näher zur benachbarten Blockkante (5a, 5b) befindliche Teilabschnitte (10'a) mit einer Länge von 3,0 mm bis 9,0 mm und parallel zu den Blockkanten (5a, 5b) ausgerichtete, zur benachbarten Blockkante (5a, 5b) weiter entfernte Teilabschnitte (10"a) mit einer Länge von 0,5 mm bis 5,0 mm aufweist.

6. Fahrzeugluftreifen nach einem der Ansprüche 1 bis 5, **dadurch gekennzeichnet, dass** in den mittleren Blöcken (4) und in den schulterseitigen Blöcken (5) zwischen den Einschnitten (7, 9) ein bis drei Mikrorillen (8, 10) verlaufen.

7. Fahrzeugluftreifen nach Anspruch 6, **dadurch gekennzeichnet, dass** Mikrorillen, die zwischen zwei Einschnitten verlaufen, zumindest über den Großteil ihrer Erstreckung zueinander gleich große Abstände aufweisen.

8. Fahrzeugluftreifen nach Anspruch 7, **dadurch gekennzeichnet, dass** die Anzahl der Einschnitte (7) pro mittlerem Block (4) vier bis neun, insbesondere sechs oder sieben, beträgt.

9. Fahrzeugluftreifen nach einem der Ansprüche 1 bis 8, **dadurch gekennzeichnet, dass** in den schulterseitigen Blöcken (5) weitere, insbesondere jeweils zwei oder drei, Mikrorillen (11) ausgebildet sind, welche die sich parallel zueinander und kreuzungsfrei erstreckenden Mikrorillen (8, 10, 10') und Einschnitte (7, 9) kreuzen.

10. Fahrzeugluftreifen nach Anspruch 9, **dadurch gekennzeichnet, dass** die weiteren Mikrorillen (11) in Draufsicht zur Umfangsrichtung unter einem Winkel von bis 13°, insbesondere von um bis zu 10°, verlaufen.

11. Fahrzeugluftreifen nach Anspruch 9, **dadurch gekennzeichnet, dass** die weiteren Mikrorillen (11) in Draufsicht in Umfangsrichtung verlaufen.

## Claims

1. Pneumatic vehicle tyre comprising a tread with shoulder-side blocks (5), which extend in the axial direction and comprise block edges (5a, 5b) running parallel or substantially parallel to one another, and with central blocks (4) between the shoulder-side blocks (5), the shoulder-side blocks (5) and the central blocks (4) being provided in each case with at least two sipes (7, 9), which run parallel to one another in plan view and have a width of 0.4 mm to 0.8 mm and a depth at their deepest point of at least 50% of the profile depth, the shoulder-side blocks (5) and the central blocks (4) being provided with multiple micro grooves (8, 10, 10'), in particular at least four micro grooves, which extend parallel to one another in plan view and have a width of 0.2 mm to 0.5 mm and a depth of 0.2 mm to 0.5 mm, the micro grooves (8, 10, 10') extending parallel to the sipes (7, 9) and without crossing,
**characterized**
**in that**, at least over the majority of their extent in plan view, the sipes (9) and the micro grooves (10, 10') formed in the shoulder-side blocks (5) run in each case in the shape of baseless isosceles trapezoids, which adjoin one another and face alternatingly in one circumferential direction and the other,
**in that** the central blocks (4) are substantially parallelogram-shaped in plan view and stand on "tips" in the circumferential direction, and
**in that** the sipes (7) and micro grooves (8) formed in the central blocks (4) run in a wave shape or in a zigzag shape in plan view.

2. Pneumatic vehicle tyre according to Claim 1, **characterized in that** the sipes (9) and the micro grooves (10, 10') in the shoulder-side blocks (5) have portions (9'b, 10'b) forming sides of the trapezoid and portions (9'a, 10'a, 10"a) running parallel to the block edges (5a, 5b), the portions (9'b, 10'b) forming sides of the trapezoid respectively forming an angle of 110° to 160° with the portions (9'a, 10'a, 10"a) running parallel to the block edges (5a, 5b).

3. Pneumatic vehicle tyre according to Claim 1 or 2, **characterized in that** the sipes (9) and the micro grooves (10, 10') in the shoulder-side blocks (5) have portions which are respectively the sides of two trapezoids directly adjoining one another.

4. Pneumatic vehicle tyre according to one of Claims 1 to 3, **characterized in that**, in the shoulder-side blocks (5), a single micro groove (10'), which over at least 80% of its extent is at a constant distance from the respectively adjacent edge-side sipe (9), respectively runs between the edge-side sipes (9) and the block edges (5a, 5b).

5. Pneumatic vehicle tyre according to Claim 4, **characterized in that** the single micro groove (10') in each case has subportions (10'a) aligned parallel to the block edges (5a, 5b), which are closer to the adjacent block edge (5a, 5b) and have a length of 3.0 mm to 9.0 mm, and subportions (10"a) aligned parallel to the block edges (5a, 5b), which are further away from the adjacent block edge (5a, 5b) and have a length of 0.5 mm to 5.0 mm.

6. Pneumatic vehicle tyre according to one of Claims 1 to 5, **characterized in that**, in the central blocks (4) and in the shoulder-side blocks (5), one to three micro grooves (8, 10) run between the sipes (7, 9).

7. Pneumatic vehicle tyre according to Claim 6, **characterized in that** micro grooves that run between two sipes are at same distances apart, at least over the majority of their extent.

8. Pneumatic vehicle tyre according to Claim 7, **characterized in that** the number of sipes (7) per central block (4) is four to nine, in particular six or seven.

9. Pneumatic vehicle tyre according to one of Claims 1 to 8, **characterized in that** further micro grooves (11) are formed in the shoulder-side blocks (5), in particular in each case two or three micro grooves (11), which cross micro grooves (8, 10, 10') and sipes (7, 9) extending parallel to one another and without crossing.

10. Pneumatic vehicle tyre according to Claim 9, **characterized in that** in plan view the further micro grooves (11) run at an angle of up to 13°, in particular of around up to 10°, in relation to the circumferential direction.

11. Pneumatic vehicle tyre according to Claim 9, **characterized in that** in plan view the further micro grooves (11) run in the circumferential direction.

## Revendications

1. Pneumatique de véhicule muni d'une bande de roulement qui est munie de blocs côté épaulement (5) s'étendant dans la direction axiale, munis de bords de bloc (5a, 5b) s'étendant en parallèle ou essentiellement en parallèle les uns aux autres, et de blocs centraux (4) entre les blocs côté épaulement (5), les blocs côté épaulement (5) et les blocs centraux (4) étant chacun dotés d'au moins deux incisions (7, 9) s'étendant en parallèle les unes aux autres en vue de dessus, qui présentent une largeur de 0,4 mm à 0,8 mm et, à leur point le plus profond, une profondeur d'au moins 50 % de la profondeur du profil, les blocs côté épaulement (5) et les blocs centraux (4) étant dotés de plusieurs, notamment d'au moins quatre, micro-rainures (8, 10, 10'), s'étendant en parallèle les unes aux autres en vue de dessus, ayant une largeur de 0,2 mm à 0,5 mm et une profondeur de 0,2 mm à 0,5 mm, les micro-rainures (8, 10, 10') s'étendant en parallèle aux incisions (7, 9) et sans croisement,
**caractérisé en ce que**
les incisions (9) et les micro-rainures (10, 10') formées dans les blocs côté épaulement (5) s'étendent à chaque fois en vue de dessus, au moins sur la majeure partie de leur étendue, sous la forme de trapèzes isocèles sans base consécutifs les uns aux autres, qui pointent alternativement dans l'une et l'autre direction circonférentielle,
**en ce que** les blocs centraux (4) sont essentiellement sous forme de parallélogramme en vue de dessus et sont agencés debout sur des « pointes » dans la direction circonférentielle, et
**en ce que** les incisions (7) et les micro-rainures (8) formées dans les blocs centraux (4) s'étendent sous forme ondulée ou en zigzag en vue de dessus.

2. Pneumatique de véhicule selon la revendication 1, **caractérisé en ce que** les incisions (9) et les micro-rainures (10, 10') dans les blocs côté épaulement (5) comprennent des sections (9'b, 10'b) formant des branches de trapèze et des sections (9'a, 10'a, 10"a) s'étendant en parallèle aux bords de bloc (5a, 5b), les sections (9'b, 10'b) formant des branches de trapèze formant à chaque fois un angle de 110° à 160° avec les sections (9'a, 10'a, 10"a) s'étendant en parallèle aux bords de bloc (5a, 5b).

3. Pneumatique de véhicule selon la revendication 1 ou 2, **caractérisé en ce que** les incisions (9) et les micro-rainures (10, 10') dans les blocs côté épaulement (5) comprennent des sections qui sont respectivement les branches de trapèze de deux trapèzes directement adjacents l'un à l'autre.

4. Pneumatique de véhicule selon l'une quelconque des revendications 1 à 3, **caractérisé en ce que**, dans les blocs côté épaulement (5), entre les incisions côté bord (9) et les bords de bloc (5a, 5b), s'étend à chaque fois une micro-rainure individuelle (10'), qui présente sur au moins 80 % de son étendue un espacement constant par rapport à l'incision côté bord respectivement voisine (9).

5. Pneumatique de véhicule selon la revendication 4, **caractérisé en ce que** la micro-rainure individuelle respective (10') comprend des sections partielles (10'a) orientées en parallèle aux bords de bloc (5a, 5b), plus proches du bord de bloc voisin (5a, 5b), ayant une longueur de 3,0 mm à 9,0 mm, et des sections partielles (10"a) orientées parallèlement aux bords de bloc (5a, 5b), plus éloignées du bord de bloc voisin (5a, 5b), ayant une longueur de 0,5 mm à 5,0 mm.

6. Pneumatique de véhicule selon l'une quelconque des revendications 1 à 5, **caractérisé en ce qu'**une à trois micro-rainures (8, 10) s'étendent entre les incisions (7, 9) dans les blocs centraux (4) et dans les blocs côté épaulement (5).

7. Pneumatique de véhicule selon la revendication 6, **caractérisé en ce que** les micro-rainures, qui s'étendent entre deux incisions, présentent des espacements identiques les unes des autres au moins sur la majeure partie de leur étendue.

8. Pneumatique de véhicule selon la revendication 7, **caractérisé en ce que** le nombre d'incisions (7) par bloc central (4) est de quatre à neuf, notamment de six ou sept.

9. Pneumatique de véhicule selon l'une quelconque des revendications 1 à 8, **caractérisé en ce que** des micro-rainures (11) supplémentaires, notamment à chaque fois deux ou trois, sont formées dans les blocs côté épaulement (5), qui croisent les micro-rainures (8, 10, 10') et les incisions (7, 9) s'étendant en parallèle les unes aux autres et sans croisement.

10. Pneumatique de véhicule selon la revendication 9, **caractérisé en ce que** les micro-rainures supplémentaires (11) s'étendent en vue de dessus à un angle de jusqu'à 13°, notamment de jusqu'à 10°, par rapport à la direction circonférentielle.

11. Pneumatique de véhicule selon la revendication 9, **caractérisé en ce que** les micro-rainures supplémentaires (11) s'étendent dans la direction circonférentielle en vue de dessus.
